# EUROPEAN PATENT SPECIFICATION

(11) **EP 1 436 133 B1**
(45) Date of publication and mention of the grant of the patent: **04.02.2009**
(21) Application number: 02766992.8
(22) Date of filing: 03.10.2002
(51) Int. Cl.: B29C 45/27

(54) **GAP SEAL BETWEEN A NOZZLE AND A MOLD COMPONENT IN A HOT-RUNNER ASSEMBLY FOR AN INJECTION MOLDING APPARATUS**
DICHTUNG MIT ABSTAND ZWISCHEN DÜSE UND WERKZEUG IN EINEM HEISSKANAL FÜR EINE SPRITZGIESSVORRICHTUNG
JOINT PLACE ENTRE UNE BUSE ET UN COMPOSANT MOULE DANS UN ENSEMBLE A CANAUX CHAUFFANTS POUR UN APPAREIL DE MOULAGE PAR INJECTION

(30) Priority: 03.10.2001 CA 2358187; 15.10.2001 US 328830 P
(43) Date of publication of application: 14.07.2004
(73) Proprietor: Mold-Masters (2007) Limited, Georgetown ON L7G 4X5 (CA)
(72) Inventor: BABIN, Denis, Georgetown, Ontario L7L 4X5 (CA); OLARU, George, Toronto, Ontario M2L 1A7 (CA)
(74) Representative: Grünecker, Kinkeldey, Stockmair & Schwanhäusser Anwaltssozietät
(86) International application number: PCT/CA2002/001483
(87) International publication number: WO 2003/028973

(56) References cited:
- EP-A- 0 590 677
- GB-A- 1 540 698
- US-A- 5 820 899
- US-B1- 6 287 107
- ROBINSON J D ET AL: "GATING AND COOLING TECHNIQUES FOR POLYPROPYLENE" , PLASTICS, XX, XX, PAGE(S) 47-51 XP002003238 figure 18

## Description

### FIELD OF THE INVENTION

This invention relates to an injection molding apparatus, and more particularly to a seal between a nozzle and a mold component in an injection molding apparatus.

### BACKGROUND OF THE INVENTION

A hot runner injection molding apparatus typically includes nozzles that are heated to maintain melt therein at a controlled temperature. The nozzles are typically in contact with a mold component that defines one or more mold cavities. The mold cavities in the mold component are filled with melt that first passes through the nozzles. The mold component is then typically cooled in order to solidify the melt in the mold cavities, thus forming a plurality of molded parts, which are then ejected from the mold cavities.

Because the nozzles are typically heated, and the mold component is cooled for at least a portion of an injection molding cycle, it is desirable to have a relatively low heat transfer from the nozzles into the mold component. Many nozzle constructions have been proposed in the past to address this issue.

An example of such a nozzle construction is shown in US Patent No. 5,554, 395, to Hume et al. The '395 patent teaches a multi-piece nozzle tip assembly including a tip piece, a tip surrounding piece and a resilient element. The resilient element is provided between the tip piece and the mold component, to inhibit melt leakage therepast. However, heat can be lost from the tip piece through the resilient element and into the mold component. In particular, the heat losses occur near the downstream end of the tip piece, where control over the temperature of the melt is particularly important.

An edge gated injection molding apparatus is described in US 5,820,899, wherein each nozzle has a circular sealing ring and several gate inserts. The gate inserts provide a gap with the mold plate preventing melt to be sucked back into the gate.

A generic injection molding apparatus is disclosed in US 6,287,107, wherein the mounting is arranged so as to minimize contact of the nozzle with the cooled mold plate. A seal against melt leakage is achieved by compression contact of the heated distal tip end of the nozzle with a surface of the mold plate.

Thus, there is a continuing need for new nozzle constructions that have further improved heat transfer efficiency.

### SUMMARY OF THE INVENTION

The invention is directed to an injection molding apparatus incorporating a nozzle.

The nozzle is comprising a nozzle body, a heater and a first gap seal surface. The nozzle body defines a nozzle body melt passage, that is adapted to be downstream from and in fluid communication with a melt source, and upstream from and in fluid communication with a gate into a mold cavity in a mold component. The heater is thermally connected to the nozzle body for heating melt in the nozzle body melt passage. The first gap seal surface is positioned on a tip surrounding piece that is connected at least indirectly to the nozzle body. The first gap seal surface is adapted to be separated by a gap with respect to a second gap seal surface on the mold component. The gap is sized to inhibit the flow of melt between the first gap seal surface and the second gap seal surface, as defined in claim 1.

### DESCRIPTION OF THE DRAWINGS

For a better understanding of the present invention and to show more clearly how it may be carried into effect, reference will now be made by way of example to the accompanying drawings, in which:
Figure 1 is a sectional view of a portion of a nozzle in accordance with a first embodiment of the present invention;
Figure 2 is a magnified view of a sealing portion of the nozzle shown in Figure 1;
Figure 3a is a sectional view of a portion of a nozzle in accordance with a second embodiment of the present invention;
Figure 3b is a magnified view of a sealing portion of the nozzle shown in Figure 2;
Figure 3c is a sectional view of a portion of a nozzle in accordance with a third embodiment of the present invention;
Figure 4 is a sectional view of a portion of a nozzle in accordance with a fourth embodiment of the present invention;
Figure 5 is a sectional view of a portion of a nozzle in accordance with a fifth embodiment of the present invention;
Figure 6 is a sectional view of a portion of a nozzle;
Figure 7 is a side view of a nozzle;
Figure 8 is a sectional view of a portion of the nozzle shown in Figure 7;
Figure 9 is a sectional view of a portion of a nozzle;
Figure 10 is a sectional view of a portion of a nozzle in accordance with a further embodiment of the present invention;
Figure 11 is a sectional view of a portion of a nozzle in accordance with a further embodiment of the present invention; and
Figure 12 is a sectional view of an injection molding apparatus incorporating a nozzle in accordance with an embodiment of the present invention.

### DESCRIPTION OF THE PREFERRED EMBODIMENT

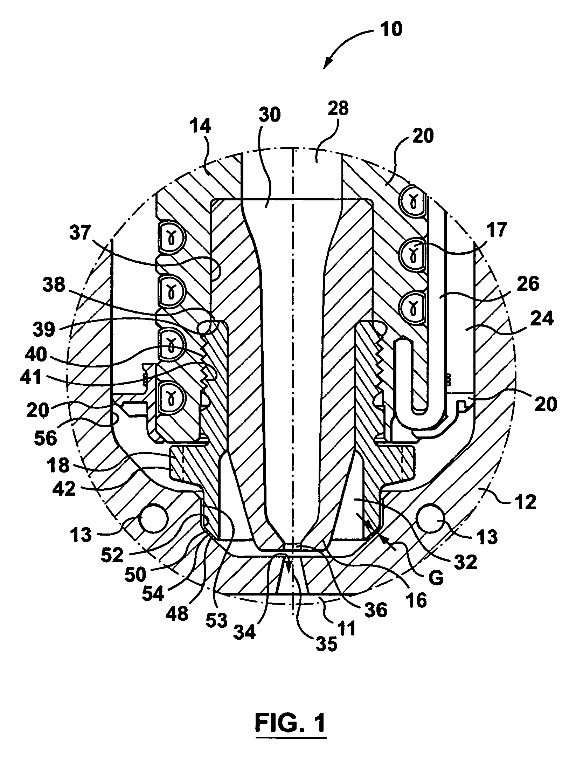

Reference is made to Figure 1, which shows a nozzle 10, in accordance with a first embodiment of the present invention. Nozzle 10 is for transferring melt from a runner in a manifold in a hot runner injection molding apparatus to a mold cavity 11 in a mold component 12. Mold cavity cooling channels 13 may optionally be included in mold component 12.

Nozzle 10 includes a nozzle body 14, a tip 16, and a heater 17 and may include a tip surrounding piece 18, an alignment piece 20 and a thermocouple 26. The nozzle body 14 has a body melt passage 28 that passes therethrough.

The heater 17 may be any suitable kind of heater, such as a resistive wire heater, or a sleeve heater, as long as it is thermally connected to the nozzle body 14, i.e. the heater 17 is connected such that heat is transferable from the heater 17 to the nozzle body 14. For example, the heater 17 may wrap around the nozzle body 14 in a groove on the outer surface of the nozzle body 14.

The tip 16 may be removably connected to the nozzle body 14. The tip 16 defines a tip melt passage 30 therethrough that is downstream from and in fluid communication with the body melt passage 28. The tip melt passage 30 may exit from tip 16 into a chamber 32. A gate 34 transfers melt from the chamber 32 into the mold cavity 11.

Melt passes from a melt source, through one or more runners in a runner component such as a manifold, through the nozzle body melt passage 28, through the tip melt passage 30, through the chamber 32, through the gate 34 and finally into the mold cavity 11. The centre of the gate 34 defines an axis 35, which is parallel to the direction of flow of melt through gate 34, into the mold cavity 11.

The exit from the tip melt passage into the chamber 32 is shown at 36. Exit 36 may be concentric with respect to axis 35, as shown in Figure 1.

Because the melt flows through the tip 16, the tip 16 can be used to transfer heat from the heater 17 to the melt. To facilitate the heat transfer, the tip 16 is preferably made from a thermally conductive material, such as Beryllium-Copper.

Because of the melt flow through tip 16, the tip 16 may be exposed to a highly abrasive environment, and it may be desirable to make the tip 16 from a wear resistant material. An example of a material that is both thermally conductive and wear resistant is Tungsten Carbide. The tip 16 may be made in accordance with the teachings in US Patent No. 5,658,604 (Gellert et al.), which discloses the construction of a nozzle tip using Tungsten Carbide.

The tip 16 may be positioned within a bore 37 in the nozzle body 14. Depending on the material selected for the tip 16, a threaded portion can be relatively difficult to machine. Furthermore, such a threaded portion can be brittle and subject to premature failure, depending on the material of manufacture for the tip 16. Thus, by making the tip 16 threadless, a greater number of materials are available for its manufacture.

Furthermore, by making the tip 16 threadless, some cost of manufacture is saved for the tip 16 and correspondingly for the nozzle body 14, relative to a threaded tip.

The tip surrounding piece 18 may retain the tip 16 in place in the nozzle body 14. The tip surrounding piece 18 may include a jam surface 38 which abuts a shoulder 39 on the tip 16 to retain the tip 16 in place. The jam surface 38 and the shoulder 39 may cooperate to form a mechanical seal.

The tip surrounding piece 18 may be removably attachable to the nozzle body 14. For example, the tip surrounding piece 18 may include a tip surrounding piece threaded portion 40 for mating with a corresponding nozzle body threaded portion 41 on the nozzle body 14. The threaded portion 40 as shown in Figure 1 is an external thread, however, it is alternatively possible for the tip surrounding piece to include an internal thread to mate with an external thread on the nozzle body 14.

The tip surrounding piece 18 may also include a tool engagement portion 42, for receiving a tool (not shown), for the installation and removal of the tip surrounding piece 18 with respect to the nozzle body 14.

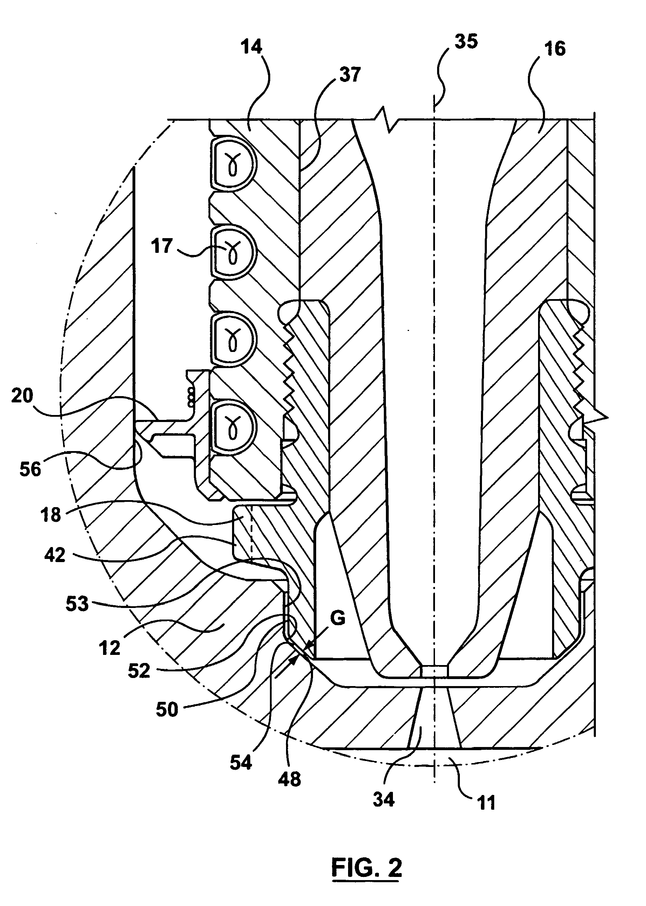

A gap seal 48 may be formed by the tip surrounding piece 18 in cooperation with the mold component 12, as shown more clearly in Figure 2. More specifically, a tip surrounding piece sealing surface 50 on the tip surrounding piece 18 may cooperate with a mold component sealing surface 52 on the mold component 12 to form the gap seal 48. The tip surrounding piece sealing surface 50 may be an outer surface on the tip surrounding piece 18, and the mold component sealing surface 52 may be the wall of the nozzle well, which is shown at 53 The tip surrounding piece sealing surface 50 and the mold component sealing surface 52 are separated from each other by a gap G. The tip surrounding piece sealing surface 50 may be referred to as the first gap seal surface 50, and the mold component sealing surface 52 may be referred to as the second gap seal surface 52.

Due to the viscosity of the melt in the chamber 32, the proximity of the first tip surrounding piece sealing surface 50 and the mold component sealing surface 52 inhibits melt from flowing between the first tip surrounding piece sealing surface 50 and the tip sealing surface 52. Thus, the gap G, in conjunction with the viscosity of the melt, acts as a seal.

The Gap G may be less than approximately .07 mm if it the only seal and is not combined with a mechanical seal. If the gap seal 48 is used in combination with a mechanical seal, the gap G may optimally be approximately 15 mm, or may be less than approximately .25 mm. It will be noted that the gap G required to inhibit the flow of melt is dependent on the specific molding application. The rheological properties of the melt at the injection temperature, such as its viscosity, determine the maximum gap G that provides the desired seal.

An advantage to including the gap seal 48 is that the manufacturing tolerances for sealing surfaces 50 and 52 are less demanding, relative to a typical mechanical sealing portion. A further advantage is that because melt does not pass through the gap seal 48, an air space 54 is maintained between the tip surrounding piece 18 and the mold component 12. The air space 49 provides an insulative layer to reduce heat transfer between the tip surrounding piece 18, and from the entire nozzle 10 in general, into the mold component 12.

To further reduce heat losses from the tip surrounding piece 18 and from the nozzle 10 in general into the mold component 12, the tip surrounding piece 18 may be made from a material that has a thermal conductivity that is lower than that of the material for the tip 16, depending on the specific requirements of the molding application.

The tip surrounding piece 18 may alternatively be made from a material that has a thermal conductivity that is similar to that of the nozzle tip 16. Because the tip surrounding piece 18 may be positioned between a portion of the heater 17 and the tip melt passage 30, as shown in Figure 1, it may be advantageous to make the tip surrounding piece 18 from a material that has a thermal conductivity that is generally equal to that of the tip 16, to improve heat transfer between the heater 17 and the tip melt passage 30.

Because the melt that contacts the tip surrounding piece 18 is generally slower moving than the melt flowing through the tip 16, the tip surrounding piece 18 may be made from a material that is less wear resistant than that of the tip 16. Accordingly, the tip surrounding piece 18 may be made from a material that is relatively easily machined with threads.

Referring to Figure 1, the alignment piece 20 may be included to align the nozzle 10 with respect to the gate 34 in molding applications where such alignment is important. The alignment piece 20 may be positioned between the nozzle body 14 and a bore 56 in the mold component 12. The bore 56 includes therein, the nozzle well 53. The alignment piece 20 may be positioned between the mold component 12 and any other suitable component of the nozzle 10, instead of the nozzle body 10.

The alignment piece 20 may be made from a material that has a lower thermal conductivity than that of the nozzle portion with which it is in contact, which is in this case, the nozzle body 14. For example, the alignment piece 20 may be made from tool steel, titanium, H13, or any other suitable material. It is alternatively possible for the alignment piece 20 to be integrally formed into the nozzle body 14, or into any other suitable portion of the nozzle 10, such as the tip surrounding piece 18.

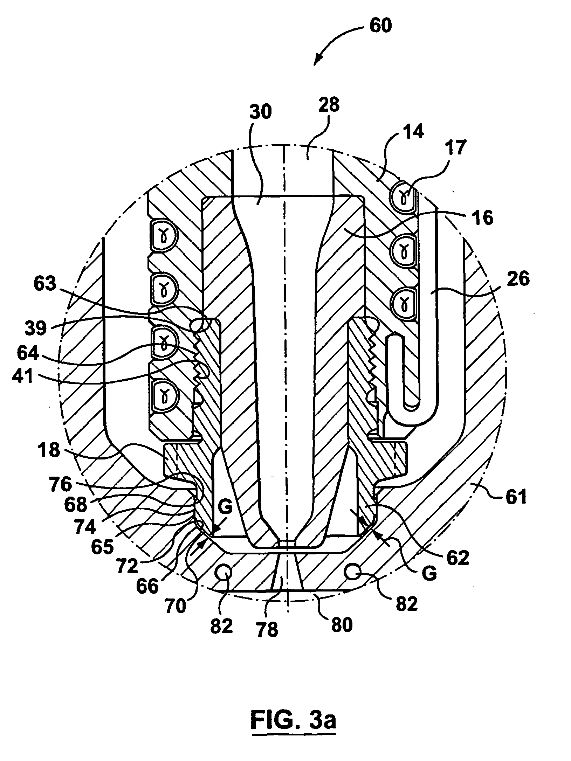

Reference is made to Figure 3a, which shows a nozzle 60 in accordance with a second embodiment of the present invention, in combination with a mold component 61.

Nozzle 60 is similar to nozzle 10 (Figure 1), and includes the nozzle body 14, the tip 16, and the heater 17, and may include a tip surrounding piece 62 and a thermocouple 26. The tip surrounding piece 62 may be similar to the tip surrounding piece 18 (Figure 1), and may have a jam surface 63 thereon which cooperates with the shoulder 39 on the tip 16 to retain the tip 16 in place in the nozzle body 14.

The tip surrounding piece 62 may include a tip surrounding piece threaded portion 64 that cooperates with the threaded portion 41 on the nozzle body 14, so that the tip surrounding piece 62 is removably attached to the nozzle body 14.

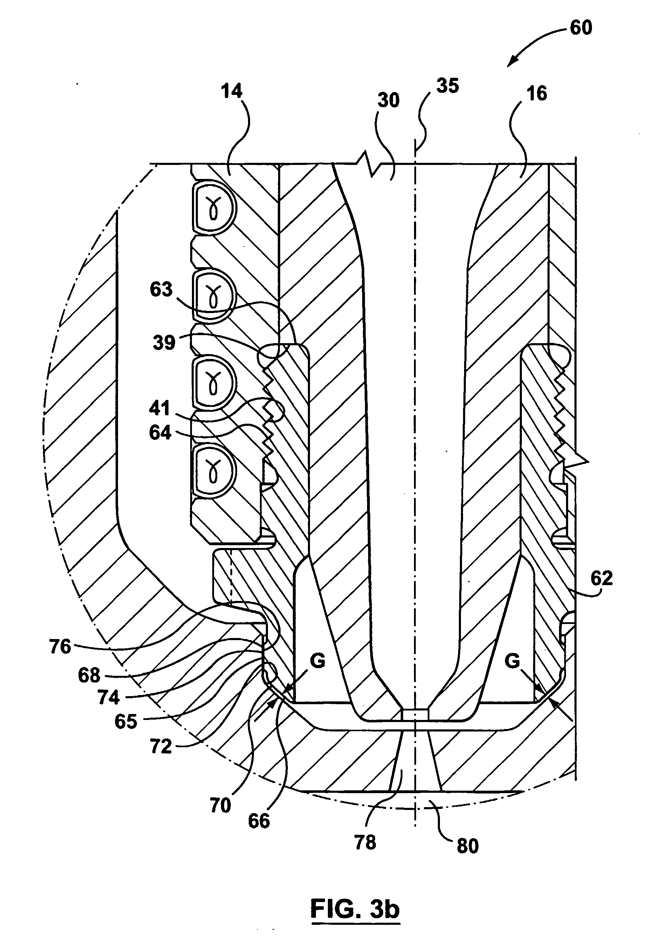

The tip surrounding piece 62 cooperates with the mold component 61 to form a multi-portion seal 65 therebetween. The multi-portion seal 65 includes a gap seal 66 and also includes a second seal 68, which may be, for example, a mechanical seal, that is adjacent the gap seal 66. The gap seal 66 may be similar to the gap seal 48 (Figure 1), and is formed by the cooperation of a first tip surrounding piece sealing surface 70 on the tip surrounding piece 62, with a first mold component sealing surface 72 on the mold component 61. The first tip surrounding piece sealing surface 70 and the first mold component sealing surface 72 are separated by the gap G, as shown more clearly in Figure 3b. The first tip surrounding piece sealing surface 70 and the first mold component sealing surface 72 may be referred to as the first gap seal surface 70 and the second gap seal surface 72, respectively.

Because of the presence of the second seal 68, the gap G, in the embodiment shown in Figure 3a may optimally be approximately .15 mm, and may be less than approximately .25 mm.

The second seal 68 may also be referred to as a supplementary seal 68, and is formed by the cooperation of a second tip surrounding piece sealing surface 74 on the tip surrounding piece 62, with a second mold component sealing surface 76 on the mold component 61. The sealing surfaces 74 and 76 may contact each other, as shown in Figure 3a. The second tip surrounding piece sealing surface 74 and a second mold component sealing surface 76 may be referred to as the first supplementary seal surface 74 and the second supplementary seal surface 76 respectively.

The second seal 68 may be positioned behind the gap seal 66 with respect to the chamber 32, so that melt is exposed to the gap seal 66 before the second seal 68.

Because of the presence of the gap seal 66, the surface area of contact between the tip surrounding piece 62 and the mold component 61 along the sealing surfaces 74 and 76, is smaller than would be required if the second seal 68 acted alone to seal against melt leakage therepast. Thus, the heat transfer from the tip surrounding piece 62 and from the nozzle 60 in general, into the mold component 61 is reduced accordingly.

In addition to forming the second seal 68, the second sealing surfaces 74 and 76 may cooperate to align the nozzle 10 with respect to the gate, which is shown at 78. This applies particularly in the case, as shown in Figure 3a, where the sealing surfaces 74 and 76 are substantially vertical surfaces. However, the second sealing surfaces 74 and 76 may be inclined instead of being vertical, and may still be adapted to align the nozzle 60 with respect to the gate 78.

Referring to Figure 3a, the mold component 61 may be similar to the mold component 12 (Figure 1), and defines a plurality of mold cavities 80, each of which has at least one gate 78 leading thereto. The mold component 61 may include cooling channels 82 for cooling of melt in the mold cavities 80.

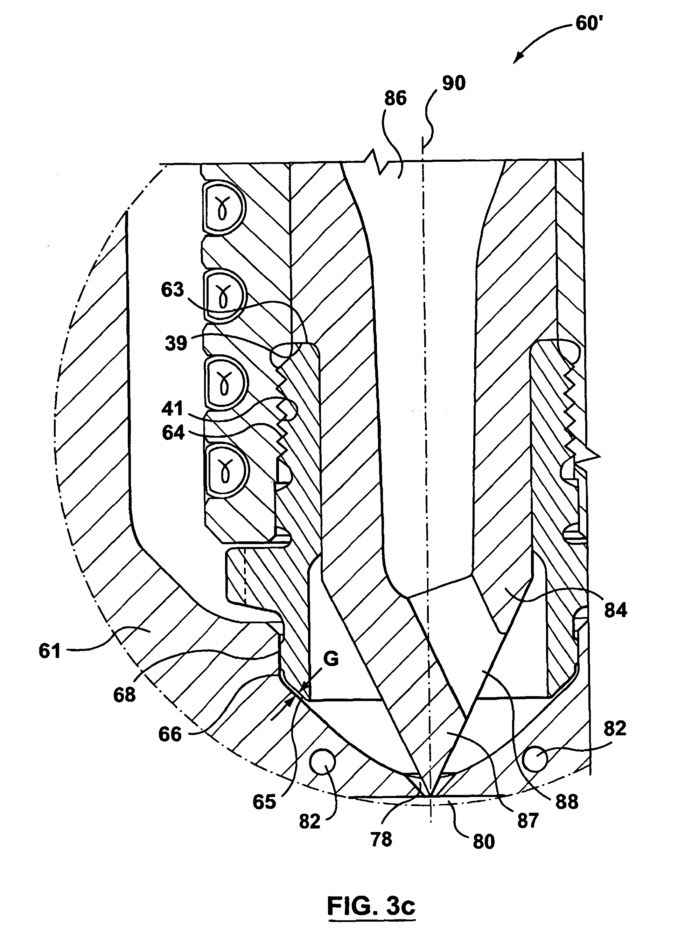

Reference is made to Figure 3c, which shows a variant 60' of the embodiment shown in Figure 3a. In the nozzle 60', a tip 84 replaces the tip 16 (Figure 3a). The tip 84 may be similar to the tip 16 (Figure 3a) and may define a tip melt passage 86 therethrough. However, the tip 84 includes a torpedo portion 87, and the tip melt passage 86 may have an exit 88 that is off-centre from the axis of the gate 78, which is shown at 90.

It will be noted that the tip 84 may also replace the tip 16 in the embodiment shown in Figures 1 and 2.

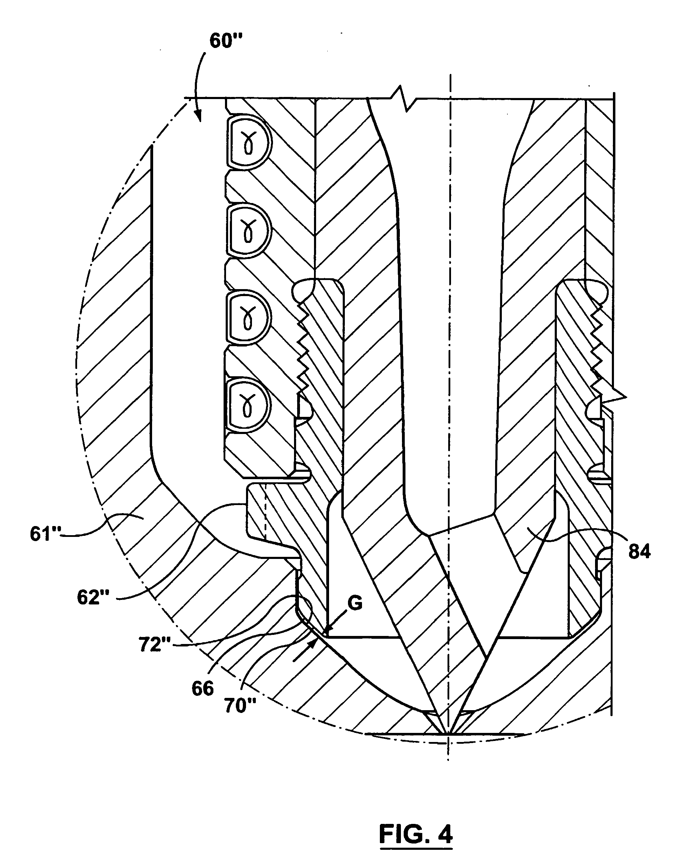

Reference is made to Figure 4, which shows another variant 60" of the embodiment shown in Figure 3a. In the variant shown in Figure 4, the tip 84 replaces the tip 16 (Figure 3a). The items shown in Figure 4 are similar to those in Figure 3a, except as follows. A gap seal 66" is formed which is similar to the gap seal 66 (Figure 3a), except that the gap seal 66" is formed between a first tip surrounding piece sealing surface 70" on a tip surrounding piece 62", and a first mold component sealing surface 72" on a mold component 61". The first sealing surfaces 70" and 72" may be entirely inclined surfaces in the embodiment shown in Figure 4, whereas they are shown as including an inclined portion and a substantially vertical portion in the embodiment shown in Figures 3a. The first sealing surfaces 70" and 72" may also be referred to as the first and second gap seal surfaces 70" and 72" respectively.

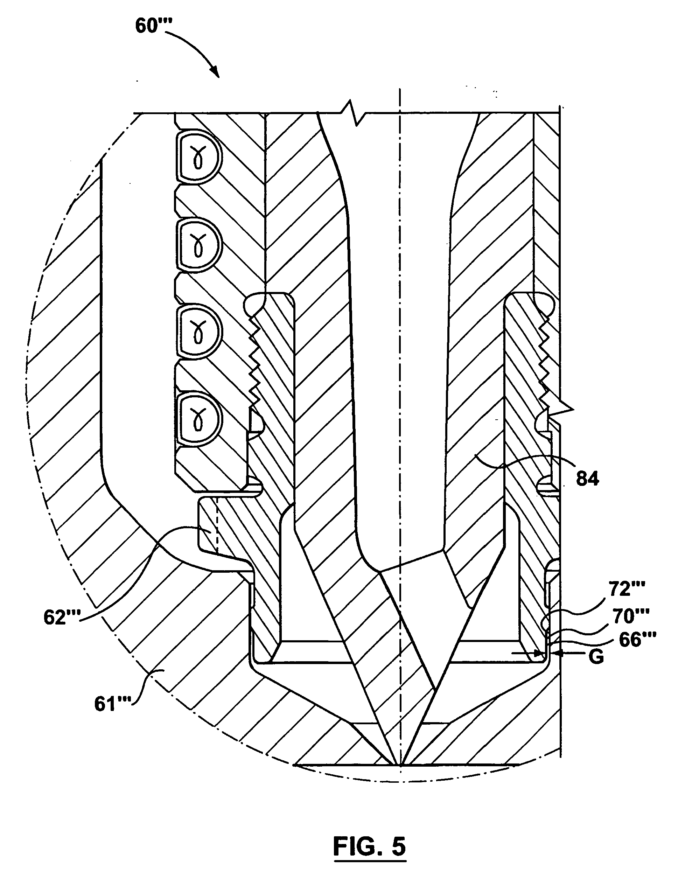

Reference is made to Figure 5, which shows yet another variant 60''' of the embodiment shown in Figure 3a. In the variant shown in Figure 5, the tip 84 replaces the tip 16 (Figure 3a). The items shown in Figure 5 are similar to those in Figure 3a, except as follows. A gap seal 66''' is formed which is similar to the gap seal 66 (Figure 3a), except that the gap seal 66''' is formed between a first tip surrounding piece sealing surface 70''' on a tip surrounding piece 62"', and a first mold component sealing surface 72''' on a mold component 61'''. The first sealing surfaces 70''' and 72''' may be substantially vertical surfaces in the embodiment shown in Figure 5, whereas they are shown as including an inclined portion and a substantially vertical portion in the embodiment shown in Figures 3a. The first sealing surfaces 70"' and 72''' may also be referred to as the first and second gap seal surfaces 70''' and 72''' respectively.

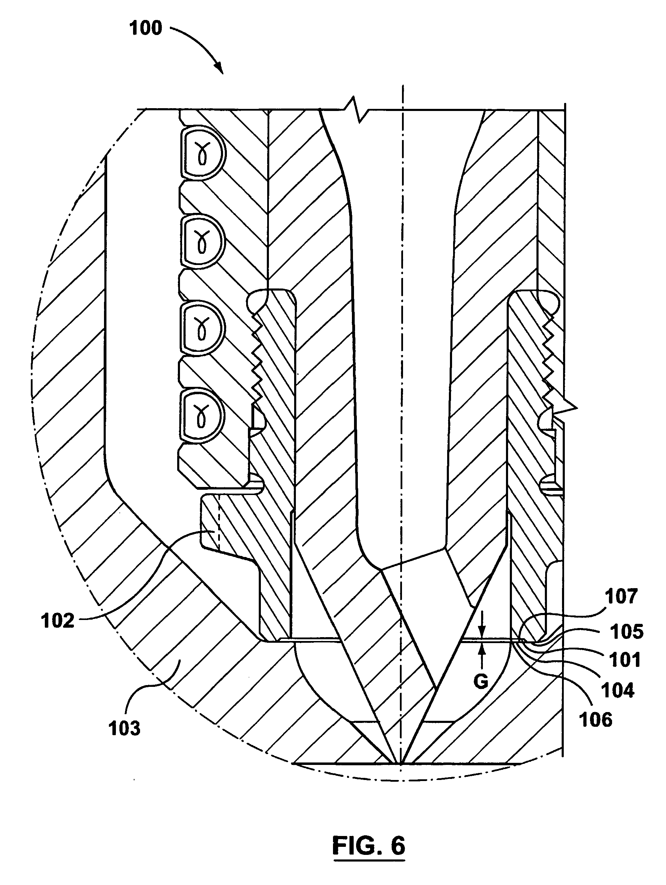

Reference is made to Figure 6, in which a nozzle 100 is shown. The nozzle 100 may be similar to the nozzle 60 (Figure 3a), and may include a multi-portion seal 101 between a tip surrounding piece 102 and a mold component 103.

The multi-portion seal 101 includes a gap seal 104 and a second seal 105. The gap seal 101 is made by a first tip surrounding piece sealing surface 106 on the tip surrounding piece 102 cooperating with a first mold component sealing surface 107 on the mold component 103.

In this embodiment, the sealing surfaces 106 and 107 may be substantially horizontal as shown, and are separated by the gap G. The sealing surfaces 106 and 107 may also be referred to as the first and second gap seal surfaces 106 and 107 respectively. In this embodiment, a separate alignment means (not shown) may be included if desired.

It will be noted that the nozzle 100 may optionally not include the second seal 105, and have only the gap seal 101 with the mold component 103.

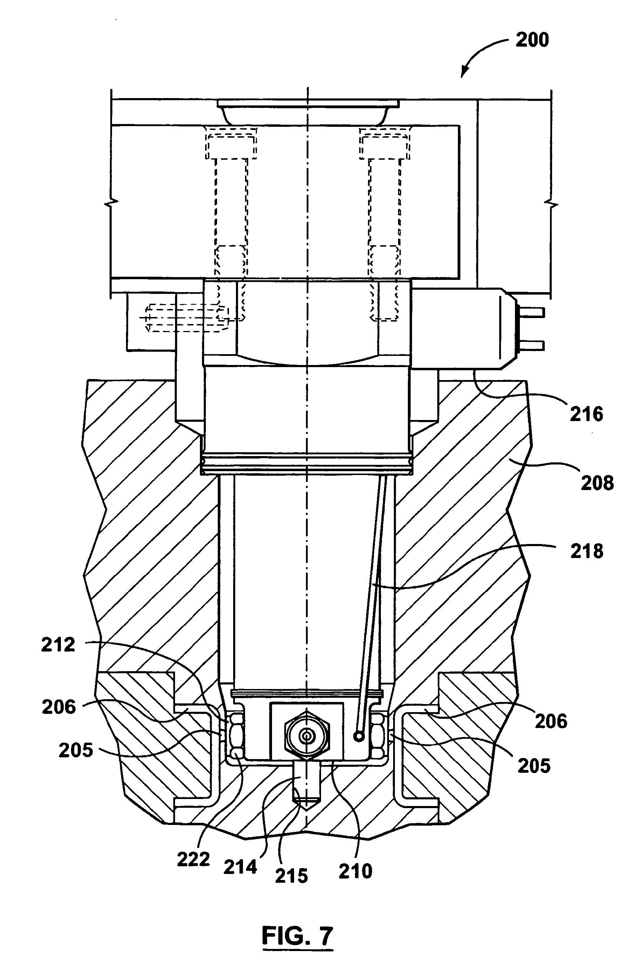

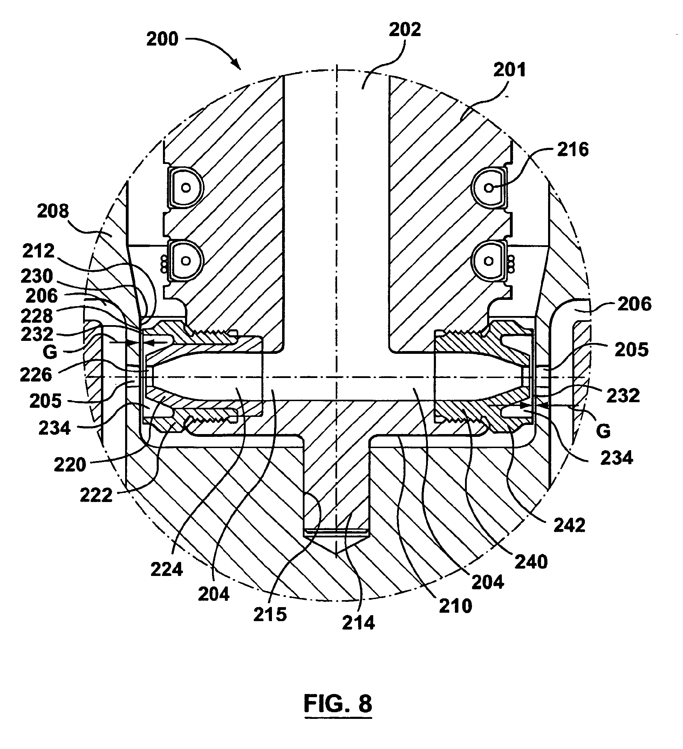

Reference is made to Figures 7 and 8, which show a nozzle 200. Nozzle 200 is similar to nozzle 10, but is an edge-gated nozzle. Nozzle 200 includes a nozzle body 201 having a nozzle melt passage 202, which divides into a plurality of the melt passage portions 204 (Figure 8). Nozzle 200 is for feeding melt through a plurality of gates 205 into a plurality of mold cavities 206, in a mold component 208. Nozzle 200 has an end 210, which may be positioned in a bore 212 in the mold component 208, for transferring melt into the mold cavities 206. On the end 210 is mounted a guide piece 214. The guide piece 214 fits within a guide aperture 215 for aligning the end 210 of nozzle 200 in the bore 212. The nozzle 200 may include a heater 216 and a thermocouple 218 (Figure 7).

Referring to Figure 8, each nozzle melt passage portion 204 has therewith a nozzle tip 220 and a tip surrounding piece 222. The tip 220 and the tip surrounding piece 222 may mount to the nozzle body 201, in a similar manner to tip 16 and tip surrounding piece 18 to nozzle body 14 (Figure 1). The tip 220 includes a tip melt passage 224 is in communication with a nozzle melt passage portion 204, and has an exit 226. The tip surrounding piece 222 may include a tip surrounding piece sealing surface 228 that surrounds exit 226 and gate 205, and is positioned at a gap G from a mold component sealing surface 230 on the mold component 208, forming a gap seal 232 therewith. A chamber 234 is defined between the tip 220 and the gate 205. The tip surrounding piece sealing surface 228 and the mold component sealing surface 230 may be referred to as the first and second gap seal surfaces 228 and 230 respectively.

Melt passes through nozzle melt passage 202, melt passage portions 204, tip melt passages 224, out from exits 226 into chambers 234, through gates 205 and into mold cavities 206. Melt is inhibited from escaping from chamber 234 by the gap seal 232.

Nozzle 200 may include an alternative tip 240 and tip surrounding piece 242 which are integrally joined, forming a single piece, instead of tip 220 and tip surrounding piece 222, or may include some of each type of tip and tip surrounding piece.

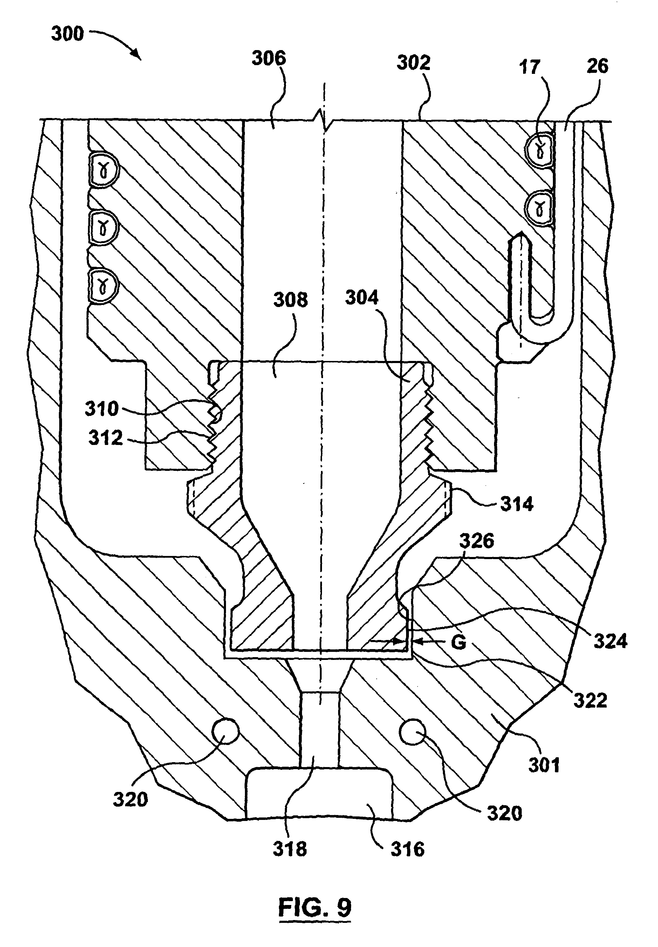

Reference is made to Figure 9, which shows a nozzle 300, in combination with a mold component 301. The nozzle 300 may be similar to nozzle 10 (Figure 1), and includes a nozzle body 302, the heater 17, a tip 304 and may optionally include the thermocouple 26. The nozzle body 302 defines a nozzle body melt passage 306 therethrough. The heater 17 may be positioned on the nozzle body 302 in any suitable way, for heating melt in the nozzle body melt passage 306.

The tip 304 may be similar to the tip 16 (Figure 1) and defines a tip melt passage 308 therethrough. The tip 304 may be removably connected to the nozzle body 302 in any suitable way, so that the tip melt passage 308 is in fluid communication with and downstream from the nozzle body melt passage 306. The tip 304 may, for example, have a tip threaded portion 310 for mating with a nozzle body threaded portion 312 on the nozzle body 302. The tip may further include a tip tool engagement portion 314 for receiving a tool (not shown), for the installation and removal of the tip 304 with respect to the nozzle body 302.

The mold component 301 defines a plurality of melt cavities 316, each of which has at least one gate 318 leading thereto. A plurality of cooling channels 320 may be included in the mold component 301 to cool melt in the mold cavities 316.

A gap seal 322 may be formed by the cooperation of the tip sealing surface 324 and a mold component sealing surface 326, which are separated by the gap G. The tip sealing surface 324 and the mold component sealing surface 326 may also be referred to as the first and second gap seal surfaces 324 and 326 respectively.

The tip can be manufactured by any of the materials that are used for the tip 16 (Figure 1), however, it may be advantageous to use a material other than Tungsten Carbide, due to the existence of the threaded portion 310 on the tip 304.

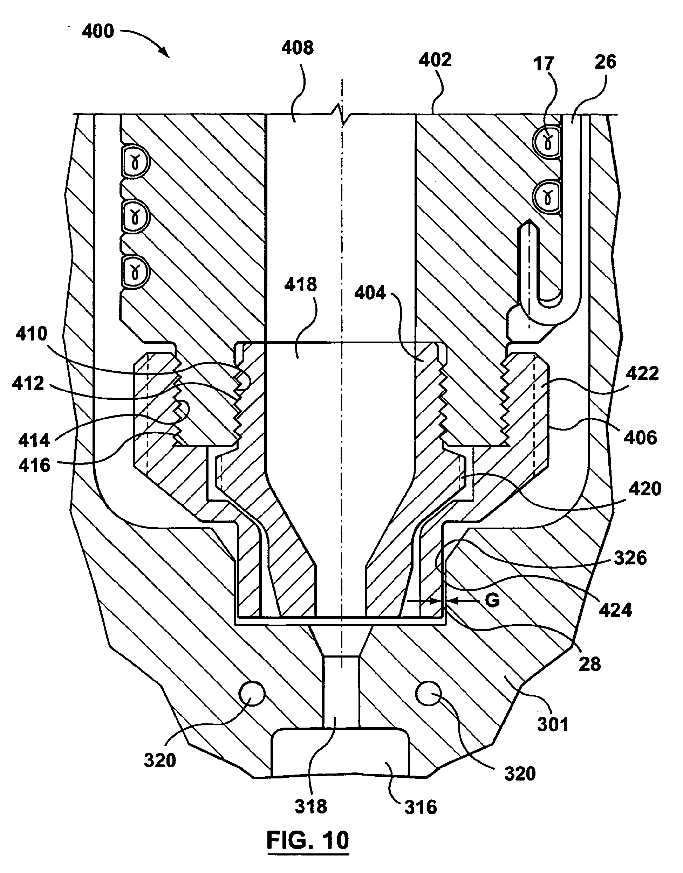

Reference is made to Figure 10, which shows a nozzle 400 in accordance with another embodiment of the present invention, in combination with the mold component 301. The nozzle 400 may be similar to the nozzle 300 and includes a nozzle body 402, the heater 17, a tip 404, a tip surrounding piece 406 and may optionally include the thermocouple 26. The nozzle body 402 may be similar to the nozzle body 302 (Figure 9), and defines a nozzle body melt passage 408 therethrough. The nozzle body 402 also includes a first nozzle body threaded portion 410 for mating with a tip threaded portion 412 on the tip 404. The nozzle body 402 also includes a second nozzle body threaded portion 414 for mating with a tip surrounding piece threaded portion 416 on the tip surrounding piece 406. The tip 404 may be similar to the tip 304 and defines a melt passage 418 therethrough. The tip 404 may also include a tip tool engagement portion 420 for receiving a tool (not shown). In the embodiment shown in Figure 10, the tip 404 is removably connected to the nozzle body 402 by means of the cooperation of threaded portions 416 and 410.

The tip surrounding piece 406 may be similar to the tip surrounding piece 18 (Figure 1), except that the threaded portion 414 on the tip surrounding piece 406 may be an internally threaded portion, instead of an externally threaded portion, and except that the tip surrounding piece 406 does not retain the tip 404 in place.

The tip surrounding piece 406 may include a tip surrounding piece tool engagement portion 422 for receiving a tool (not shown).

The tip surrounding piece 406 has a tip surrounding piece sealing surface 424, which cooperates with the mold component sealing surface 326 to form a gap seal 428 therewith. The sealing surfaces 424 and 326 are separated by the gap G, which inhibits melt leakage therebetween. The sealing surfaces 424 and 326 may also be referred to as the first and second gap seal surfaces 424 and 326 respectively.

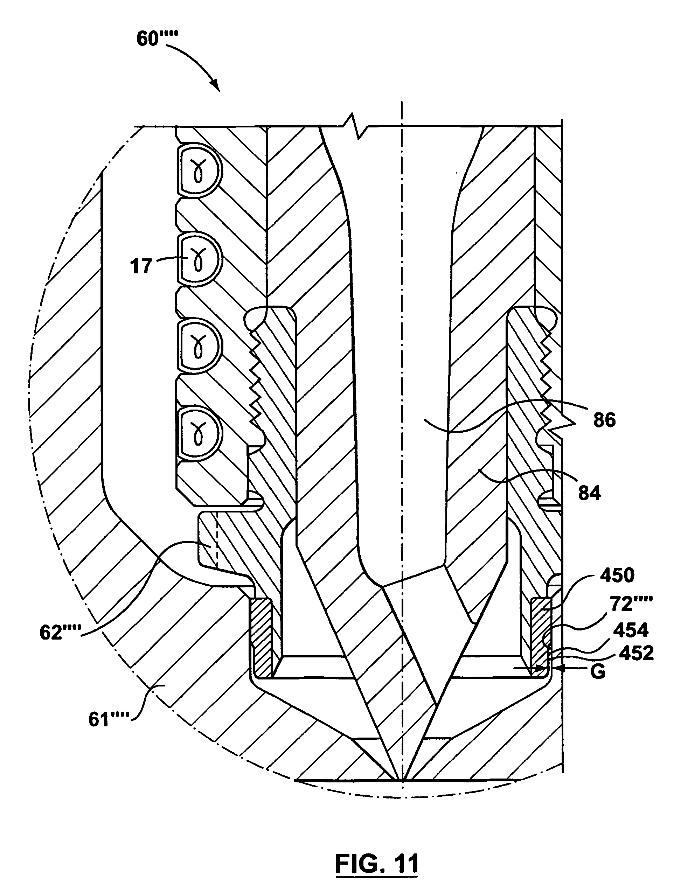

Reference is made to Figure 11, which shows a nozzle 60"", in combination with a mold component 61"", in accordance with a variant of the nozzle 60''' and mold component 61"' shown in Figure 5. The nozzle 60"" may be similar to the nozzle 60"' with the exception that a tip surrounding piece 62"" on the nozzle 60"" includes a seal piece 450 thereon. The seal piece 450 may be a band that surrounds the outer surface of the tip surrounding piece 62"", and forms a gap seal 452 with the mold component 61"". The seal piece 450 has a sealing surface before that mates with mold component sealing surface 72"" to form the gap seal 452. The sealing surfaces 454 and 72"" are separated by the gap G, which inhibits melt leakage therepast. The sealing surfaces 454 and 72"" may also referred to as the first and second gap seal surfaces 454 and 72"" respectively.

The seal piece 450 may be made from a material that has a lower thermal conductivity than that of the tip surrounding piece 62"". The seal piece 450 may, for example, be made from titanium, H13, stainless steel, mold steel or chrome steel. Other alternative materials include ceramics and plastics. The seal piece 450 may, instead of being a separate piece that is joined to the tip surrounding piece 62"", be a coating or layer that is applied to a portion of the outside surface of the tip surrounding piece 62"".

The tip surrounding piece 62"" may be positioned, at least in part, between the heater and the tip melt passage 86. It may be advantageous in the case shown in Figure 11, for the tip surrounding piece 62"" to be made from a material that is generally equally thermally conductive as the material of the tip 84. The seal piece 450 reduces the heat transfer between the tip surrounding piece 62"" and the mold component 61"", by being made from a material that has a lower thermal conductivity than that of the tip surrounding piece 62"".

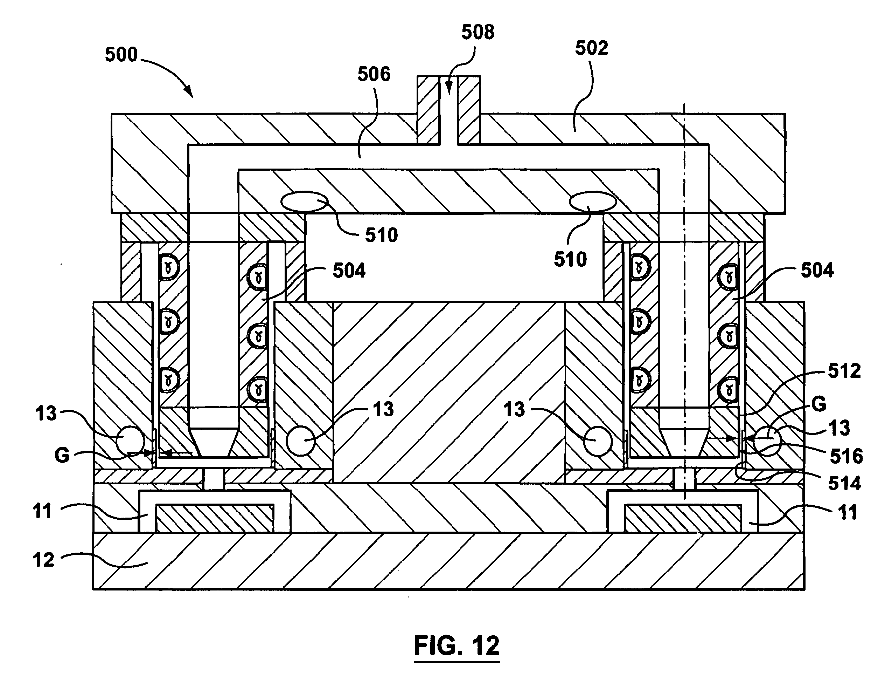

Reference is made to Figure 12, which shows an injection molding apparatus 500, that includes a runner component 502, the mold component 12 and a plurality of nozzles 504 in accordance with the present invention.

The runner component 502 includes a plurality of runners 506 which transfer melt from a main runner inlet 508 to the nozzles 504. The runner component 502 may be heated by a heater 510.

The nozzles 504 transfer melt from the runner component 502 to the mold component 12. The nozzles 504 may be any of the nozzle embodiments and variants described above and shown in Figures 1-5, 10 and 11, and include a nozzle sealing surface 512 that is separated from a mold component sealing surface 514 by the gap G to form a gap seal 516 therewith. The nozzle sealing surface 512 and the mold component sealing surface 514 may also be referred to as the first and second gap seal surfaces 512 and 514 respectively. The nozzle sealing surface 512 may be positioned on any suitable portion or component of the nozzle 504.

A particular example of an injection molding apparatus is shown in Figure 12. It will be appreciated that the injection molding apparatus that incorporates the gap seal of the present invention may be any suitable type of injection molding apparatus and is not limited to the example shown.

Thermal expansion and contraction during a molding cycle must be considered during the construction of the nozzles described above, so that the gap G is within the ranges given above when the nozzle feeds melt into the gate.

It will be appreciated that it may be advantageous to size the gap G so as to reduce to a desired level, the amount of heat lost from the nozzle.

It will be appreciated that the particular configuration of the gap seal portion may be selected depending on the specific molding application, including the rheological properties of the melt, such as its viscosity at the injection temperature. It is contemplated that the invention can be applied to nozzles with types of melt other than those types of melt specifically disclosed herein.

While the above description constitutes the preferred embodiments, it will be appreciated that the present invention is susceptible to modification and change without departing from the accompanying claims.

## Claims

1. An injection molding apparatus, comprising:
a mold component (12) and at least one nozzle (10);
wherein said mold component (12) defines a mold cavity (11) and a gate (34) into said mold cavity (11),
wherein said at least one nozzle (10) includes a nozzle body (14), said nozzle body (14) defining a nozzle body melt passage (28), wherein said nozzle body melt passage (28) is adapted to be downstream from and in fluid communication with a melt source, and said nozzle body melt passage (28) is adapted to be upstream from and in fluid communication with the gate (34) into the mold cavity (11) in the mold component (12),
wherein said at least one nozzle (10) includes a heater (17) that is thermally connected to said nozzle body (14) for heating melt in said nozzle body melt passage (28), and
wherein said at least one nozzle (10) further comprising a tip (16), said tip (16) defining a tip melt passage (30) that is downstream from and in communication with said nozzle body melt passage (28), and said tip melt passage (30) is upstream from said gate (34), the centre of the gate (34) defining an axis (35) which is parallel to the direction of flow of melt through gate (34);
further comprising a tip surrounding piece (18), wherein a first gap seal surface (50) is positioned on said tip surrounding piece (18) and said mold component (12) includes a second gap seal surface (52) thereon, wherein
during a molding cycle said first gap seal surface (50) is separated by a gap (G) with respect to said second gap seal surface (52), **characterized in that** said gap (G) is sized to inhibit the flow of melt between said first gap seal surface (50) and said second gap seal surface (52), providing a gap seal (66)
wherein said first gap seal surface (50) and said second gap seal seal surface (52) are vertical or inclined other than horizontal, wherein vertical being the direction of axis (35).

2. The injection molding apparatus as claimed in claim 1, wherein said tip (16) is removably connected with respect to said nozzle body (14).

3. The injection molding apparatus as claimed in claim 1, wherein said tip surrounding piece (18) is removably connected with respect to said nozzle body (14).

4. The injection molding apparatus as claimed in claim 1, wherein said tip surrounding piece (18) retains said tip (16) in place.

5. The injection molding apparatus as claimed in claim 1, wherein said tip surrounding piece (18) is adapted to be positioned closer to said mold component (12) than said tip (16).

6. The injection molding apparatus as claimed in claim 1, wherein said tip surrounding piece (18) is adapted to cooperate with said mold component (12) to align said nozzle (10) with respect to said gate (34).

7. The injection molding apparatus as claimed in claim 1, wherein said tip surrounding piece (18) is made from a material that has a thermal conductivity that is generally similar to the thermal conductivity of said tip (16).

8. The injection molding apparatus as claimed in claim 1, wherein said tip surrounding piece (18) is made from a material that is less thermally conductive than the material of said tip (16).

9. The injection molding apparatus as claimed in claim 1, further comprising a seal piece (450) positioned on said tip surrounding piece (18), wherein said first gap seal surface (50) is positioned on said seal piece (450).

10. The injection molding apparatus as claimed in claim 9, wherein the material of said seal piece (450) has a thermal conductivity that is lower than the thermal conductivity of the material of said tip surrounding piece (18).

11. The injection molding apparatus as claimed in claim 1, further comprising an alignment piece (20) that is connected at least indirectly to said nozzle body (14) and is adapted to align said nozzle (10) with respect to said gate (34).

12. The injection molding apparatus as claimed in claim 11, wherein the material of said alignment piece (20) has a lower thermal conductivity than the thermal conductivity of the material of the component of the nozzle (10) with which said alignment piece (20) is in contact.

13. The injection molding apparatus as claimed in claim 1, wherein said gap (G) is sized in relation to the temperature of the melt, and the viscosity of the melt intended to flow through the nozzle (10).

14. The injection molding apparatus as claimed in claim 1, wherein, when said first gap seal surface (50) and said second gap seal surface (52) are separated by said gap (G), an air space is defined between said first gap seal surface (50) and said second gap seal surface (52), and said air space is adapted to insulate said nozzle (10) against heat loss.

15. The injection molding apparatus as claimed in claim 1, wherein said gap (G) is less than approximately 0.07mm.

16. The injection molding apparatus as claimed in claim 1, further comprising a first supplementary seal surface (74) positioned on said tip surrounding piece (18) and a second supplementary seal surface (76) positioned on said mold component (12), wherein said first supplementary seal surface (74) is positioned adjacent said first gap seal surface (50) and is adapted to cooperate with said second supplementary seal surface (76) to form a supplementary seal (68) in addition to said gap seal (66).

17. The injection molding apparatus as claimed in claim 16, wherein said gap (G) is less than approximately 0.25 mm.

18. The injection molding apparatus as claimed in claim 16, wherein said gap (G) is approximately 0.15 mm.

## Patentansprüche

1. Eine Spritzgießvorrichtung, umfassend:
ein Formbauteil (12) und mindestens eine Düse (10);
wobei das Formbauteil (12) einen Formhohlraum (11) und eine Angussöffnung (34) in den Formhohlraum (11) definiert,
wobei die mindestens eine Düse (10) einen Düsenkörper (14) aufweist, der Düsenkörper (14) definiert einen Düsenkörperschmelzedurchgang (28), wobei der Düsenkörperschmelzedurchgang (28) geeignet ist, stromabwärts von und in Fluidverbindung mit einer Schmelzequelle zu stehen, und wobei der Düsenkörperschmelzedurchgang (28) geeignet ist, stromaufwärts von und in Fluidverbindung mit der Formangussöffnung (34) in den Formhohlraum (11) in dem Formbauteil (12) zu stehen,
wobei die mindestens eine Düse (10) einen Heizer aufweist (17), der thermisch mit dem Düsenkörper (14) verbunden ist, um die Schmelze in dem Düsenkörperschmelzedurchgang (28) zu beheizen, und
wobei die mindestens eine Düse (10) weiter eine Spitze (16) umfasst, die Spitze (16) definiert einen Spitzenschmelzedurchgang (30), der stromabwärts von und in Verbindung mit dem Düsenkörperschmelzedurchgang (28) steht, und der Spitzenschmelzedurchgang (30) ist stromaufwärts von der Angussöffnung (34), die Mitte der Angussöffnung (34) definiert eine Achse (35), die parallel zu der Richtung der Strömung der Schmelze durch die Angussöffnung (34) ist;
weiter umfassend ein Spitzenumgebungsteil (18), wobei eine erste Spaltdichtungsoberfläche (50) auf dem Spitzenumgebungsteil (18) positioniert ist und das Formbauteil (12) eine zweite Spaltdichtungsoberfläche (52) darauf aufweist,
wobei während eines Einspritzzyklus die erste Spaltdichtungsoberfläche (50) in Bezug auf die zweite Spaltdichtungsoberfläche (52) durch einen Spalt (G) getrennt ist,
**dadurch gekennzeichnet, dass** der Spalt (G) eine Größe aufweist, um die Strömung von Schmelze zwischen der ersten Spaltdichtungsoberfläche (50) und der zweiten Spaltdichtungsoberfläche (52) zu verhindern und eine Spaltdichtung (66) bereitzustellen,
wobei die erste Spaltdichtungsoberfläche (50) und die zweite Spaltdichtungsoberfläche (52) senkrecht oder nicht-horizontal geneigt sind, wobei senkrecht die Richtung der Achse (35) ist.

2. Die Spritzgießvorrichtung nach Anspruch 1, wobei die Spitze (16) in Bezug auf den Düsenkörper (14) entfernbar verbunden ist.

3. Die Spritzgießvorrichtung nach Anspruch 1, wobei das Spitzenumgebungsteil (18) in Bezug auf den Düsenkörper (14) entfernbar verbunden ist.

4. Die Spritzgießvorrichtung nach Anspruch 1, wobei das Spitzenumgebungsteil (18) die Spitze (16) in Position hält.

5. Die Spritzgießvorrichtung nach Anspruch 1, wobei das Spitzenumgebungsteil (18) geeignet ist, näher an dem Formbauteil (12) positioniert zu sein als die Spitze (16).

6. Die Spritzgießvorrichtung nach Anspruch 1, wobei das Spitzenumgebungsteil (18) geeignet ist, mit dem Formbauteil (12) zusammenzuwirken, um die Düse (10) in Bezug auf die Formangussöffnung (34) auszurichten.

7. Die Spritzgießvorrichtung nach Anspruch 1, wobei das Spitzenumgebungsteil (18) aus einem Material hergestellt ist, das eine thermische Leitfähigkeit aufweist, die im Allgemeinen ähnlich der thermischen Leitfähigkeit der Spitze (16) ist.

8. Die Spritzgießvorrichtung nach Anspruch 1, wobei das Spitzenumgebungsteil (18) aus einem Material hergestellt ist, das geringer thermisch leitfähig ist als das Material der Spitze (16).

9. Die Spritzgießvorrichtung nach Anspruch 1, weiter umfassend ein Dichtungsstück (450), das auf dem Spitzenumgebungsteil (18) positioniert ist, wobei die erste Spaltdichtungsoberfläche (50) auf dem Dichtungsstück (450) positioniert ist.

10. Die Spritzgießvorrichtung nach Anspruch 9, wobei das Material des Dichtungsstücks (450) eine thermische Leitfähigkeit aufweist, die geringer als die thermische Leitfähigkeit des Materials des Spitzenumgebungsteils (18) ist.

11. Die Spritzgießvorrichtung nach Anspruch 1, weiter umfassend ein Ausrichtungsstück (20), das zumindest indirekt mit dem Düsenkörper (14) verbunden ist und geeignet ist, die Düse (10) in Bezug auf die Angussöffnung (34) auszurichten.

12. Die Spritzgießvorrichtung nach Anspruch 11, wobei das Material des Ausrichtungsstücks (20) eine geringere thermische Leitfähigkeit aufweist, als die thermische Leitfähigkeit des Materials des Bauteils der Düse (10) mit dem das Ausrichtungsstück (20) in Kontakt steht.

13. Die Spritzgießvorrichtung nach Anspruch 1, wobei der Spalt (G) eine Größe aufweist, die im Verhältnis zu der Temperatur und der Viskosität der Schmelze steht, die vorgesehen ist durch die Düse (10) zu strömen.

14. Die Spritzgießvorrichtung nach Anspruch 1, wobei, wenn die erste Spaltdichtungsoberfläche (50) und die zweite Spaltdichtungsoberfläche (52) durch den Spalt (G) getrennt sind, zwischen der ersten Spaltdichtungsoberfläche (50) und der zweiten Spaltdichtungsoberfläche (52) ein Luftraum definiert ist, und der Luftraum geeignet ist, die Düse (10) gegen Wärmeverluste zu isolieren.

15. Die Spritzgießvorrichtung nach Anspruch 1, wobei der Spalt (G) kleiner als etwa 0,07 mm ist.

16. Die Spritzgießvorrichtung nach Anspruch 1, weiter umfassend die erste Zusatzdichtungsoberfläche (74), positioniert auf dem Spitzenumgebungsteil (18), und eine zweite Zusatzdichtungsoberfläche (76), positioniert auf dem Formbauteil (12), wobei die erste Zusatzdichtungsoberfläche (74) angrenzend an die erste Spaltdichtungsoberfläche (50) positioniert ist und geeignet ist in der zweiten Zusatzdichtungsoberfläche (76) zusammen zu wirken, um eine Zusatzdichtung (68) zusätzlich zu der Spaltdichtung (66) zu bilden.

17. Die Spritzgießvorrichtung nach Anspruch 16, wobei der Spalt (G) kleiner als etwa 0,25 mm ist.

18. Die Spritzgießvorrichtung nach Anspruch 16, wobei der Spalt (G) in etwa 0,15 mm ist.

## Revendications

1. Appareil de moulage par injection, comprenant :
un composant de moule (12) et au moins une buse (10) ;
dans lequel ledit composant de moule (12) définit une cavité de moule (11) et une attaque de coulée (34) dans ladite cavité de moule (11) ;
dans lequel ladite au moins une buse (10) comprend un corps de buse (14), ledit corps de buse (14) définissant un passage de coulée (28) de corps de buse, dans lequel ledit passage de coulée (28) de corps de buse est adapté pour être en aval de et en communication de fluide avec une source de coulée, et ledit passage de coulée (28) de corps de buse est adapté pour être en amont de et en communication de fluide avec l'attaque de coulée (34) dans la cavité de moule (11) dans le composant de moule (12) ;
dans lequel ladite au moins une buse (10) comprend un dispositif de chauffage (17) qui est thermiquement raccordé audit corps de buse (14) pour chauffer la coulée dans ledit passage de coulée (28) de corps de buse, et
dans lequel ladite au moins une buse (10) comprend en outre une pointe (16), ladite pointe (16) définissant un passage de coulée (30) de pointe qui est en aval de et en communication avec ledit passage de coulée (28) de corps de buse et ledit passage de coulée (30) de pointe est en amont de ladite attaque de coulée (34), le centre de l'attaque de coulée (34) définissant un axe (35) qui est parallèle à la direction d'écoulement de coulée à travers l'attaque de coulée (34) ;
comprenant en outre une pièce périphérique de pointe (18), dans laquelle une première surface de joint d'étanchéité d'espace (50) est positionnée sur ladite pièce périphérique de pointe (18) et ledit composant de moule (12) comprend une seconde surface de joint d'étanchéité d'espace (52) sur celui-ci ; dans lequel :
pendant un cycle de moulage, ladite première surface de joint d'étanchéité d'espace (50) est séparée par un espace (G) par rapport à la seconde surface de joint d'étanchéité d'espace (52), **caractérisé en ce que** ledit espace (G) est dimensionné pour empêcher l'écoulement de la coulée entre ladite première surface de joint d'étanchéité d'espace (50) et ladite seconde surface de joint d'étanchéité d'espace (52), fournissant un joint d'étanchéité d'espace (66) ;
dans lequel ladite première surface de joint d'étanchéité d'espace (50) et ladite seconde surface de joint d'étanchéité d'espace (52) sont verticales ou inclinées mais pas horizontales, dans lequel la verticale est la direction de l'axe (35).

2. Appareil de moulage par injection selon la revendication 1, dans lequel ladite pointe (16) est raccordée de manière amovible par rapport audit corps de buse (14).

3. Appareil de moulage par injection selon la revendication 1, dans lequel ladite pièce périphérique de pointe (18) est raccordée de manière amovible par rapport audit corps de buse (14).

4. Appareil de moulage par injection selon la revendication 1, dans lequel ladite pièce périphérique de pointe (18) retient ladite pointe (16) en place.

5. Appareil de moulage par injection selon la revendication 1, dans lequel ladite pièce périphérique de pointe (18) est adaptée pour être positionnée plus à proximité dudit composant de moule (12) que ladite pointe (16).

6. Appareil de moulage par injection selon la revendication 1, dans lequel ladite pièce périphérique de pointe (18) est adaptée pour coopérer avec ledit composant de moule (12) pour aligner ladite buse (10) par rapport à ladite attaque de coulée (34).

7. Appareil de moulage par injection selon la revendication 1, dans lequel ladite pièce périphérique de pointe (18) est réalisée à partir d'un matériau qui a une conductivité thermique qui est généralement similaire à la conductivité thermique de ladite pointe (16).

8. Appareil de moulage par injection selon la revendication 1, dans lequel ladite pièce périphérique de pointe (18) est réalisée à partir d'un matériau qui est moins thermiquement conducteur que le matériau de ladite pointe (16).

9. Appareil de moulage par injection selon la revendication 1, comprenant en outre une pièce de joint d'étanchéité (450) positionnée sur ladite pièce périphérique de pointe (18), dans lequel ladite première surface de joint d'étanchéité d'espace (50) est positionnée sur ladite pièce de joint d'étanchéité (450).

10. Appareil de moulage par injection selon la revendication 9, dans lequel le matériau de ladite pièce de joint d'étanchéité (450) a une conductivité thermique qui est inférieure à la conductivité thermique du matériau de ladite pièce périphérique de pointe (18).

11. Appareil de moulage par injection selon la revendication 1, comprenant en outre une pièce d'alignement (20) qui est raccordée au moins indirectement audit corps de buse (14) et est adaptée pour aligner ladite buse (10) par rapport à ladite attaque de coulée (34).

12. Appareil de moulage par injection selon la revendication 11, dans lequel le matériau de ladite pièce d'alignement (20) a une conductivité thermique inférieure à la conductivité thermique du matériau du composant de la buse (10) avec lequel ladite pièce d'alignement (20) est en contact.

13. Appareil de moulage par injection selon la revendication 1, dans lequel ledit espace (G) est dimensionné par rapport à la température de la coulée, et à la viscosité de la coulée prévue pour s'écouler à travers la buse (10).

14. Appareil de moulage par injection selon la revendication 1, dans lequel, lorsque ladite première surface de joint d'étanchéité d'espace (50) et ladite seconde surface de joint d'étanchéité (52) sont séparées par ledit espace (G), un espace d'air est défini entre ladite première surface de joint d'étanchéité d'espace (50) et ladite seconde surface de joint d'étanchéité d'espace (52), et ledit espace d'air est adapté pour isoler ladite buse (10) contre la perte de chaleur.

15. Appareil de moulage par injection selon la revendication 1, dans lequel ledit espace (G) est inférieur à approximativement 0,07 mm.

16. Appareil de moulage par injection selon la revendication 1, comprenant en outre une première surface de joint d'étanchéité supplémentaire (74) positionnée sur ladite pièce périphérique de pointe (18) et une seconde surface de joint d'étanchéité supplémentaire (76) positionnée sur ledit composant de moule (12), dans lequel ladite première surface de joint d'étanchéité supplémentaire (74) est positionnée de manière adjacente à ladite première surface de joint d'étanchéité d'espace (50) et est adaptée pour coopérer avec ladite seconde surface de joint d'étanchéité supplémentaire (76) pour former un joint d'étanchéité supplémentaire (68) en plus dudit joint d'étanchéité d'espace (66).

17. Appareil de moulage par injection selon la revendication 16, dans lequel ledit espace (G) est inférieur à approximativement 0,25 mm.

18. Appareil de moulage par injection selon la revendication 16, dans lequel ledit espace (G) est d'approximativement de 0,15 mm.
